# EUROPÄISCHE PATENTSCHRIFT

(11) **EP 1 454 204 B1**
(45) Veröffentlichungstag und Bekanntmachung des Hinweises auf die Patenterteilung: **11.10.2006**
(21) Anmeldenummer: 02805282.7
(22) Anmeldetag: 20.11.2002
(51) Int. Cl.: G05D 3/10, G05G 5/06

(54) **SCHALTARRETIERUNG**
SWITCH LOCK
DISPOSITIF DE BLOCAGE DE COMMUTATEUR

(30) Priorität: 12.12.2001 DE 10161035
(43) Veröffentlichungstag der Anmeldung: 08.09.2004
(73) Patentinhaber: Schaeffler KG, 91074 Herzogenaurach (DE)
(72) Erfinder: SCHNAPP, Peter, 90431 Nürnberg (DE)
(86) Internationale Anmeldenummer: PCT/EP2002/012972
(87) Internationale Veröffentlichungsnummer: WO 2003/054648

(56) Entgegenhaltungen:
- DE-A- 4 437 508

## Beschreibung

### Gebiet der Erfindung

Die vorliegende Erfindung bezieht sich auf eine Schaltarretierung mit der Verstellpositionen eines axial verschiebbaren und/oder schwenkbaren Stellelementes gesichert werden können. Insbesondere ist die Schaltarretierung in Schaltgetrieben einsetzbar, mit der das Schaltgestänge in definierten Positionen fixierbar ist. Der Aufbau der Schaltarretierung umfasst ein dünnwandiges vorzugsweise durch ein Tiefziehverfahren spanlos hergestelltes, topfartig gestaltetes Gehäuse, in dem ein Führungsteil über eine Wälzlagerung verschiebbar gelagert ist. Zur Arretierung ist in das Führungsteil stirnseitig eine Rastkugel positioniert, die in eine mit der Rastkugelgeometrie übereinstimmende Ausnehmung des Stellelementes verrastet. Vorzugsweise ist die Schaltarretierung in eine Wandung des Getriebegehäuses so eingesetzt, dass die Rastkugel dem Schaltgestänge zugeordnet ist.

### Hintergrund der Erfindung

Aus der DE 44 30 922 A1 ist eine Schaltarretierung der zuvor beschriebenen Bauart bekannt. Übereinstimmend zeigt dieser Stand der Technik ein spanlos hergestelltes topfartiges Gehäuse, das an dem zur Rastkugel ausgerichteten offenen Ende auf der Mantelfläche mit einem Außengewinde versehen ist, mit dem die Schaltarretierung, beispielsweise in eine Gewindebohrung des Getriebegehäuses eingeschraubt werden kann. Als Tiefenanschlag bzw. zur Erzielung einer definierten Einbaulage, ist das Gehäuse mit einer radial nach außen gerichteten umlaufenden Doppelung versehen. Das Gehäuse bildet weiterhin einen außenseitigen Sechskant zwischen dem Boden und der Doppelung des Gehäuses. Dieses Mehrkantprofil ist zur Aufnahme eines Werkzeuges vorgesehen, mit dem die Schaltarretierung in die Gewindebohrung, beispielsweise eines Getriebegehäuses, eingeschraubt und lagefixiert werden kann. Ein derartiges Gehäuse, das einen spanlos hergestellten Grundkörper mit einer radial nach außen gerichteten Doppelung umfasst sowie ein sich an die Doppelung anschließendes Mehrkantprofil erfordert eine zusätzlich eine mechanische Nachbearbeitung, zur Herstellung des Außengewindes.

### Zusammenfassung der Erfindung

Der Erfindung liegt die Aufgabe zu Grunde, eine kostenoptimierte Schaltarretierung zu schaffen.

Die zuvor genannte Problemstellung wird gemäß der Erfindung durch eine Schaltarretierung gelöst, die ein spanlos ausschließlich durch ein Tiefziehverfahren hergestelltes Gehäuse umfasst, und dem eine separate Gewindebuchse zugeordnet ist. Dazu ist das Gehäuse passgenau in die Aufnahmebohrung der Gewindebuchse eingesetzt, wobei diese Bauteile durch geeignete Mittel miteinander verbunden sind. Über das spanlos in das Gehäuse eingeformte Mehrkantprofil, das sich von dem Boden des Gehäuses ausgehend, über einen Teilbereich der Mantelfläche erstreckt und das zur Aufnahme eines Werkzeugs vorgesehen ist, kann die gesamte Schaltarretierung verschraubt und befestigt werden. Die Verbindung zwischen dem Gehäuse und der Gewindebuchse ist dabei so ausgeführt, dass diese auch dem Drehmoment beim Festschrauben der Schaltarretierung widersteht.

In vorteilhafter Weise vereinfacht die Erfindung die Herstellung des Gehäuses, das ausschließlich spanlos ohne jegliche Nacharbeit herstellbar ist. Der zusätzliche Gewindering kann beispielsweise auf Drehautomaten in hohen Stückzahlen kostengünstig herstellt werden. Folglich ergibt sich insgesamt ein Kostenvorteil gegenüber der bekannten Lösung.

Weitere vorteilhafte Ausgestaltungen der Erfindung sind Gegenstand der abhängigen Ansprüche 2 bis 8.

Vorteilhaft ist das Gehäuse bodenseitig mit einem als Sechskantprofil ausgeführten Mehrkantprofil versehen. Mit Hilfe eines handelsüblichen Werkzeugs, insbesondere einem Steckschlüssel, kann damit die gesamte Schaltarretierung, das Gehäuse mit dem zugehörigen Gewindebuchse beispielsweise in eine Gewindebohrung des Schaltgetriebes verschraubt werden.

Das spanlos in das Gehäuse eingeformte Mehrkantprofil bzw. Sechskantprofil bildet vorzugsweise innenseitig eine Führung für die Druckfeder. Diese Maßnahme verbessert die Funktion der Schaltarretierung, indem ein nachteiliges Ausknicken der zwischen dem Boden des Gehäuses und dem Führungsteil eingesetzten Druckfeder wirksam an beiden Federenden unterbunden werden kann.

Zur Erzielung einer dauerfesten Verbindung zwischen der Gewindebuchse und dem Gehäuse ist vorzugsweise eine Pressverbindung oder Schrumpfverbindung vorgesehen. Alternativ eignet sich ebenfalls eine unlösbare Befestigung, die vorzugsweise eine Löt- oder eine Schweißverbindung zwischen dem Gehäuse und der Gewindebuchse vorsieht oder alternativ eine Verklebung.

In vorteilhafter Weise ermöglicht die erfindungsgemäße Gestaltung der Schaltarretierung eine beliebige Befestigungslage der Gewindebuchse an der Mantelfläche des Gehäuses. Dadurch kann unmittelbar Einfluss auf die Federkraft bzw. Arretierkraft der Schaltarretierung genommen werden, mit die Rastkugel in eine Ausnehmung des Schaltgestänges oder des Stellelementes der Getriebeschaltung formschlüssig verrastet. Mit dieser Maßnahme kann weiterhin die Variantenzahl von Schaltarretierungen sowohl für den Hersteller als auch für den Anwender verringert werden, indem baugleiche Schaltarretierungen sich nur durch unterschiedliche Einbaulagen der Gewindebuchse an dem Gehäuse unterscheiden.

Die Gestaltung der Gewindebuchse weist vorteilhaft einen Anschlag auf, der eine Einbaulage der Gewindebuchse und damit gleichzeitig der gesamten Schaltarretierung in dem Getriebegehäuse definiert. Im vormontierten Zustand der Schaltarretierung ist dabei der Anschlag der Gewindebuchse zu dem Mehrkantprofil bzw. dem Sechskantprofil des Gehäuses ausgerichtet.

Weiterhin schließt die Erfindung eine Verdrehsicherung zwischen dem Gehäuse und der Gewindebuchse ein. Dazu ist das Gehäuse mit zumindest einer übereinstimmend mit einer Längsachse bzw. Symmetrieachse der Schaltarretierung verlaufenden Sicke versehen, die formschlüssig jedoch spielbehaftet in - eine Längsnut der Gewindebuchse eingreift. Die radial nach außen gerichtete Sicke ist dabei so angeordnet, dass diese außerhalb einer Führungsbahn der Wälzlagerung angeordnet ist, welche in einem Ringspalt zwischen dem Führungsteil und der Innenwandung des Gehäuses eingesetzt ist.

### Kurze Beschreibung der Zeichnungen

Zwei Figuren zeigen ein Ausführungsbeispiel der Erfindung, die nachfolgend näher beschrieben werden. Es zeigen:
- Figur 1: den Längsschnitt einer erfindungsgemäßen Schaltarretierung;
- Figur 2: in einer Draufsicht die Schaltarretierung gemäß Figur 1.

### Detaillierte Beschreibung der Zeichnungen

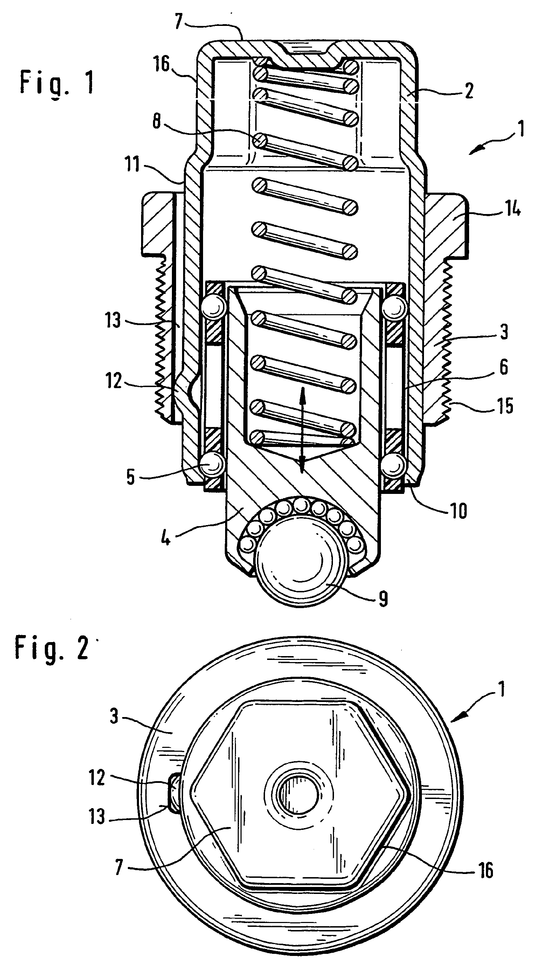

Der Aufbau einer erfindungsgemäßen Schaltarretierung 1, gemäß Figur 1, umfasst ein spanlos hergestelltes, topfartig gestaltetes Gehäuse 2, das in eine Gewindebuchse 3 eingesetzt ist. In dem Gehäuse 2 ist ein Führungsteil 4 eingesetzt, das über eine in einem radial von dem Gehäuse 2 und dem Führungsteil 4 begrenzten Ringspalt 6 eingesetzte Wälzlagerung 5 verschiebbar gelagert ist, gekennzeichnet durch den Doppelpfeil. Eine zwischen dem Boden 7 und dem Führungsteil 4 eingesetzte Druckfeder 8 bewirkt eine Kraftbeauf schlagung des Führungsteils 4 in eine von dem Boden 7 abgewandte Richtung. Stirnseitig ist in das Führungsteil 4 weiterhin eine Rastkugel 9 drehbar gelagert, die im eingebauten Zustand der Schaltarretierung 1, zur Sicherung von Verstellpositionen, in eine in Figur 1 nicht abgebildete Ausnehmung des Stellelementes eines Schaltgetriebes formschlüssig verrastet. Eine verliergesicherte Anordnung des Führungsteils 4 gegenüber dem Gehäuse 2 im vormontierten Zustand der Schaltarretierung 1 wird mittels eines endseitigen radial nach innen gerichteten Anschlags 10 an dem Gehäuse erzielt.

Die Lageposition der Gewindebuchse 3 gegenüber dem Gehäuse 2 ist nicht definiert. Vielmehr ermöglicht die Erfindung eine variable Befestigung der Gewindebuchse 3 auf der Mantelfläche 11 des Gehäuses 2, um damit unmittelbar auf die Vorspannkraft Einfluss zu nehmen, mit der das Führungsteil 4 in die Ausnehmung des Stellelementes verrastet. Zur Erzielung einer lagefixierten Befestigung der Gewindebuchse 3 an dem Gehäuse 2 sind diese Bauteile mittels einer Press- oder Schrumpfverbindung lagefixiert. Alternativ dazu eignet sich dazu ebenfalls eine unlösbare Verbindung mittels einer Schweiß- oder Lötverbindung. Zusätzlich kann zur Erzielung einer drehfixierten Anbindung der Gewindebuchse 3 an dem Gehäuse 2 eine formschlüssige Verbindung vorgesehen werden. Dazu eignet sich beispielsweise eine radial aus der Mantelfläche 11 des Gehäuses 2 austretende Sicke 12, die übereinstimmend zu einer Symmetrieachse der Schaltarretierung 1 verläuft und die spielbehaftet in eine Längsnut 13 der Gewindebuchse 3 eingreift. Die Sicke 12 ist dabei so in das Gehäuse 2 eingebracht, dass diese im eingebauten Zustand der Schaltarretierung 1 außerhalb einer Wälzkörperlaufbahn der Wälzlagerung 5 angeordnet ist, die sich bei einem Hub des Führungsteils 4 einstellt. Die Gewindebuchse 3 weist neben dem Außengewinde 15 einen Anschlag 14 auf, mit dem die Einbaulage der Gewindebuchse 3 und damit der gesamten Schaltvorrichtung 1 bestimmt werden kann. Das Gehäuse 2 bildet von dem Boden 7 ausgehend ein Mehrkantprofil 16, mit dem die Schaltarretierung 1 unterstützt durch ein Werkzeug, beispielsweise in eine Gewindebohrung eines in Figur 1 nicht gezeigten Getriebegehäuses einschraubbar ist. Vorteilhaft ist das Mehrkantprofil 16 so gestaltet, dass dieses innenseitig eine Führung für ein Federende der Druckfeder 8 bildet.

Wie der Figur 2, der Draufsicht der Schaltarretierung 1 zu entnehmen ist, bildet das Mehrkantprofil 16 einen Außensechskant. Der Außensechskant ist dabei entsprechend einem genormten Profil gestaltet, wodurch die Schaltarretierung 1 mittels eines handelsüblichen Werkzeugs, beispielsweise einem Steckschlüssel, verschraubt werden kann.

### Bezugszahlen

- 1: Schaltarretierung
- 2: Gehäuse
- 3: Gewindebuchse
- 4: Führungsteil
- 5: Wälzlagerung
- 6: Ringspalt
- 7: Boden
- 8: Druckfeder
- 9: Rastkugel
- 10: Anschlag
- 11: Mantelfläche
- 12: Sicke
- 13: Längsnut
- 14: Anschlag
- 15: Außengewinde
- 16: Mehrkantprofil

## Patentansprüche

1. Schaltarretierung zur Sicherung von Verstellpositionen eines axial verschiebbaren und/oder schwenkbaren Stellelementes, insbesondere für ein Schaltgestänge eines Schaltgetriebes, bestehend aus einem topfartig gestalteten Gehäuse (2), in dem ein Führungsteil (4) verschiebbar gelagert ist und eine zwischen dem Führungsteil (4) und einem Boden (7) des Gehäuses (2) eingesetzte Druckfeder (8) das Führungsteil (4) in Richtung des Stellelementes beaufschlagt, wobei zur Arretierung eine stirnseitig in dem Führungsteil (4) eingesetzte Rastkugel (9) in eine der geometrischen Form der Rastkugel (9) angepasste Ausnehmung des Stellelementes formschlüssig verrastet, wobei (die Schaltarretierung mit einem Außengewinde (15) und mit einem an das Gehäuse (2) angeformten Mehrkantprofil (16) für eine Befestigung der Schaltarretierung (1) versehen ist, **dadurch gekennzeichnet, dass** die Schaltarretierung einer das Gehäuse (2) umschließende und zum Gehäuse (2) separate Gewindebuchse (3) mit dem Außengewinde (15) aufweist, wobei das Gehäuse in die Gewindebuchse eingesetzt ist.

2. Schaltarretierung nach Anspruch 1, **dadurch gekennzeichnet, dass** das Mehrkantprofil (16) als ein Sechskantprofil ausgebildet ist, welches an dem von der Rastkugel (9) abgewandten Ende des Gehäuse (2) spanlos angeformt ist.

3. Schaltarretierung nach Anspruch 1, **dadurch gekennzeichnet, dass** das Mehrkantprofil (16) innerhalb des Gehäuses (2) eine Führung für die zwischen dem Boden (7) des Gehäuses (2) und dem Führungsteil (4) eingesetzte Druckfeder (8) bildet.

4. Schaltarretierung nach Anspruch 1, ***dadurch gekennzeichnet, dass*** die Gewindebuchse (3) mittels einer Pressverbindung oder einer Schrumpfverbindung mit dem Gehäuse (2) verbunden ist.

5. Schaltarretierung nach Anspruch 1, ***dadurch gekennzeichnet, dass*** die Gewindebuchse (3) unlösbar, über eine Lötverbindung oder eine Schweißverbindung an dem Gehäuse (2) befestigt ist.

6. Schaltarretierung nach Anspruch 1, ***dadurch gekennzeichnet, dass*** eine Befestigungslage der Gewindebuchse (3) an der Mantelfläche (11) des Gehäuses (2) eine Federkraft bzw. eine Arretierkraft, mit der das Führungsteil (4) in die Ausnehmung des Stellelementes verrastet, beeinflusst.

7. Schaltarretierung nach Anspruch 1, ***dadurch gekennzeichnet, dass*** die Gewindebuchse (3) einen Anschlag (14) aufweist, der im eingebauten Zustand zu dem Mehrkantprofil (16) ausgerichtet ist.

8. Schaltarretierung nach Anspruch 1, ***dadurch gekennzeichnet, dass*** das Gehäuse (2) mit einer übereinstimmend zu einer Symmetrieachse der Schaltarretierung (1) verlaufenden, radial nach außen gerichteten Sicke (12) versehen ist, die formschlüssig in eine Längsnut (13) der Gewindebuchse (3) eingreift.

## Claims

1. Gearshift lock for securing adjusted positions of an axially displaceable and/or pivoting adjusting element, in particular for a gearshift linkage of a manual transmission, said gearshift lock comprising a pot-shaped housing (2) in which a guide member (4) is mounted for displacement and a compression spring (8) inserted between the guide member (4) and a bottom (7) of the housing (2) biases the guide member (4) towards the adjusting element, locking being achieved by the fact that a detent ball (9) that is inserted frontally into the guide member (4) snaps positively into a recess of the adjusting element, which recess has a shape adapted to the geometric shape of the detent ball (9), said gearshift lock being provided with a male thread (15) and a polygonal profile (16) formed on the housing (2) for a fixing of the gearshift lock (1), **characterised in that** the gearshift lock comprises a threaded bushing (3) that surrounds the housing (2), is made separately from the housing (2) and comprises the male thread (15), the housing being inserted into the threaded bushing.

2. Gearshift lock according to claim 1, **characterised in that** the polygonal profile (16) is configured as a hexagonal profile that is integrally formed without chip removal on the end of the housing (2) turned away from the detent ball (9).

3. Gearshift lock according to claim 1, **characterised in that** the polygonal profile (16) forms a guide within the housing (2) for the compression spring (8) that is inserted between the bottom (7) of the housing (2) and the guide member (4).

4. Gearshift lock according to claim 1, **characterised in that** the threaded bushing (3) is connected to the housing (2) by a press fit or a shrink fit.

5. Gearshift lock according to claim 1, **characterised in that** the threaded bushing (3) is inseparably connected to the housing (2) by a soldered joint or by a welded joint.

6. Gearshift lock according to claim 1, **characterised in that** a fixing position of the threaded bushing (3) on the outer peripheral surface (11) of the housing (2) influences a spring force or a locking force with which the guide member (4) snaps into the recess of the adjusting element.

7. Gearshift lock according to claim 1, **characterised in that** the threaded bushing (3) comprises a stop (14) that is aligned to the polygonal profile (16) in the installed state.

8. Gearshift lock according to claim 1, **characterised in that** the housing (2) is provided with a radially outwards directed bead (12) that extends parallel to the axis of symmetry of the gearshift lock (1) and engages positively into a longitudinal groove (13) of the threaded bushing (3).

## Revendications

1. Arrêt de changement de vitesse pour la fixation de positions ajustées d'un élément d'ajustage qui peut être déplacé axialement et/ou qui peut pivoter, plus particulièrement pour une timonerie de changement de vitesse pour une boîte de vitesses manuelle, ledit arrêt comprenant un boîtier (2) configuré sous la forme d'un pot dans lequel est monté en déplacement, un élément de guidage (4) et un ressort de pression (8) inséré entre l'élément de guidage (4) et un fond (7) du boîtier (2) sollicite l'élément de guidage (4) en direction de l'élément d'ajustage, et l'arrêtage étant réalisé du fait qu'une bille (9) d'arrêt qui est insérée frontalement dans l'élément de guidage (4) s'enclenche de manière positive dans un évidement de l'élément d'ajustage, la forme de cet évidement étant adaptée à la forme géométrique de la bille (9) d'arrêt, l'arrêt de changement de vitesse étant muni d'un filet extérieur (15) et d'un profil polygonal (16) formé sur le boîtier (2) pour une fixation de l'arrêt (1) de changement de vitesse, **caractérisé en ce que** l'arrêt de changement de vitesse comprend une douille filetée (3) qui entoure le boîtier (2) et comprend le filet extérieur (15) en étant fabriquée séparément du boîtier (2), le boîtier (2) étant inséré dans la douille filetée.

2. Arrêt de changement de vitesse selon la revendication 1, **caractérisé en ce que** le profil polygonal (16) est configuré sous la forme d'un profil hexagonal qui est formé sans enlèvement de copeaux sur l'extrémité du boîtier (2) orientée à l'opposé de la bille (9) d'arrêt.

3. Arrêt de changement de vitesse selon la revendication 1, **caractérisé en ce que** le profil polygonal (16) forme, à l'intérieur du boîtier (2), un guide pour le ressort de pression (8) qui est inséré entre le fond (7) du boîtier (2) et l'élément de guidage (4).

4. Arrêt de changement de vitesse selon la revendication 1, **caractérisé en ce que** la douille filetée (3) est reliée au boîtier (2) par un engagement à la presse ou par calage à retrait.

5. Arrêt de changement de vitesse selon la revendication 1, **caractérisé en ce que** la douille filetée (3) est fixée sur le boîtier (2) de manière non détachable par une jonction par brasage ou par soudage.

6. Arrêt de changement de vitesse selon la revendication 1, **caractérisé en ce que**, une position de fixation de la douille filetée (3) sur la surface périphérique extérieure (11) du boîtier (2) influe sur une force de ressort ou une force d'arrêt avec laquelle l'élément de guidage (4) s'enclenche dans l'évidement de l'élément d'ajustage.

7. Arrêt de changement de vitesse selon la revendication 1, **caractérisé en ce que** la douille filetée (3) comprend une butée (14) qui, à l'état assemblé, est alignée au profil polygonal (16).

8. Arrêt de changement de vitesse selon la revendication 1, **caractérisé en ce que** le boîtier (2) est muni d'une moulure (12) qui s'étend en correspondance de l'axe de symétrie de l'arrêt (1) de changement de vitesse en étant orientée radialement vers l'extérieur, et qui s'engage de manière positive dans une rainure longitudinale (13) de la douille filetée (3).
